# EUROPEAN PATENT APPLICATION

(11) **EP 4 027 647 A1**
(43) Date of publication of application: **13.07.2022**
(21) Application number: 20866800.4
(22) Date of filing: 02.09.2020
(51) Int. Cl.: H04N 21/2543, H04H 60/72

(54) **IPTV FEATURE PRODUCT MANAGEMENT METHOD AND DEVICE, SERVER, AND STORAGE MEDIUM**

(30) Priority: 17.09.2019 CN 201910877742
(71) Applicant: ZTE Corporation, Shenzhen, Guangdong 518057 (CN)
(72) Inventor: LI, Liangsheng, Shenzhen, Guangdong 518057 (CN)
(74) Representative: Swindell & Pearson Limited
(86) International application number: PCT/CN2020/113068
(87) International publication number: WO 2021/052180

(57) **Abstract**

Provided are an IPTV feature product management method and device, server, and storage medium, said method comprising: obtaining product information of a user feature product in a user feature product database and sending to an ordering client (S201), the product information of the user feature product comprising product identification information, user feature service volume price, and means of ordering; receiving a user feature product order request sent by the ordering client (S202); finding a corresponding target user feature product from the user feature product according to the target product identification information, assigning the user feature service volume comprised by the target user feature product to the user account, and, according to the target means of ordering and the price in the target user feature product, performing billing processing on the user account (S203).

## Description

### CROSS-REFERENCE TO RELATED APPLICATION

The present application is based on and claims the priority of Chinese patent application No. 201910877742.5 filed on September 17, 2019, the disclosure of which is incorporated herein by reference in its entirety.

### TECHNICAL FIELD

The embodiments of the present disclosure relate to but are not limited to the communication field, and in particular relate to but are not limited to a method and device for managing feature products of IPTV, a server, and a storage medium.

### BACKGROUND

With the development of network and multimedia technology, Internet Protocol Television (IPTV) is accepted by more and more users due to advantages such as convenience, intelligence, and controllability. With the development of society, more and more new service features have emerged, such as the number of family members, the number of home online terminal devices, the capacity of personal recording space, the number of personal terminal device bindings, the number of concurrent online user terminal devices, and so on. In some cases, these service features are in a laissez-faire state or a one-size-fits-all system-level control. However, available system resources are finite. The laissez-faire state is not desirable, and the one-size-fits-all system-level control lacks flexibility.

Take the number of concurrent online user terminal devices as an example. The greater the number of concurrent users, the greater the impact on the system. If a one-size-fits-all restriction is adopted, it may not be enough for those who have more needs, but it may have no negative affect on those who have less requirements. For those who have more needs, it is obvious that the one-size-fits-all restriction is not flexible enough. If the number of one-size-fits-all restrictions is increased, it will inevitably increase the burden of the system.

To sum up, in an IPTV system, it is important to effectively control the user resources, achieve flexibility, and reduce the burden on the system. At present, there is still a need of effective technical schemes in existing technologies.

### SUMMARY

Several embodiments of the present disclosure provide a method and device for managing feature products of IPTV, aiming at solving at least one of the technical problems in existing technologies to at least a certain extent, including that IPTV system is in a laissez-faire state or performs one-size-fits-all system-level control over user service features, which is lack of flexibility in the manners of restrictions to meet more behavioral needs of users.

Therefore, an embodiment of the present disclosure provides a method for managing user feature products of IPTV, including: acquiring product information of each of the user feature products in a user feature product database, and sending the product information to a subscription client, where the product information of each of the user feature product includes product identification information, user feature traffic volume, price and subscription mode; receiving a subscription request for a user feature product sent by the subscription client, where the subscription request for a user feature product includes a user account, target product identification information and target subscription mode; and finding the target user feature product in the user feature products corresponding to the target product identification information, allocating a user feature traffic volume included in the target user feature product to a user account, and charging the user account according to the target subscription mode and the price of the target user feature product.

An embodiment of the present disclosure provides a device for managing user feature products of IPTV, including: a subscription management module configured to acquire product information of each of the user feature products in a user feature product database, and send the product information to a subscription client, where the product information of each of the user feature products includes product identification information, user feature traffic volume, price and subscription mode; and receive a subscription request for a user feature product sent by the subscription client, where the subscription request for a user feature product comprises a user account, target product identification information and target subscription mode; and a billing management module configured to, find the target user feature product in the user feature products corresponding to the target product identification information, allocate a user feature traffic volume included in the target user feature product to a user account, and charge the user account according to the target subscription mode and the price of the target user feature product.

An embodiment of the present disclosure provides a server, including a processor, a memory and a communication bus; where the communication bus is configured to implement a connection and communication between the processor and the memory; and the processor is configured to execute at least one computer programs stored in the memory, to implement the method for managing user feature products of IPTV provided by the embodiment of the present disclosure.

An embodiment of the present disclosure provides a computer-readable storage medium storing at least one computer programs executable by at least one processor, to implement the method for managing user feature products of IPTV provided by the embodiment of the present disclosure.

Other features and corresponding beneficial effects of the present disclosure are described in the latter part of the specification, and it should be understood that at least part of the beneficial effects will become apparent from the description in the specification of the present disclosure.

### BRIEF DESCRIPTION OF DRAWINGS

Fig. 1 is a schematic architecture diagram of a device and system for restricting user features of IPTV provided by embodiment one of the present disclosure;
Fig. 2 is a flow chart of the method for managing user feature products of IPTV provided by embodiment one of the present disclosure;
Fig. 3 is a block diagram of an alternative product structure provided by embodiment one of the present disclosure;
Fig. 4 is a flow chart of the method for managing user feature products of IPTV provided by embodiment two of the present disclosure;
Fig. 5 is a structural schematic diagram of a device for managing user feature products of IPTV provided by embodiment three of the present disclosure; and
Fig. 6 is a schematic structural diagram of a server provided by embodiment four of the present disclosure.

### DETAILED DESCRIPTION

In order to make the purpose, technical schemes and advantages of the present disclosure clear, the embodiments of the present disclosure will be described in further detail below through the implementations and the accompanying drawings. It should be understood that the embodiments are only used to explain the present disclosure, and are not intended to limit the present disclosure.

### Embodiment one:

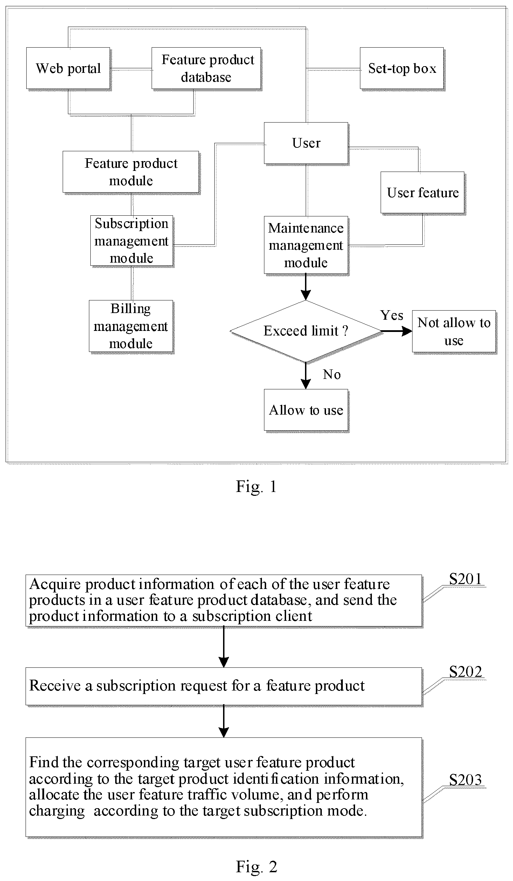

Some existing IPTV systems operate in a laissez-faire state or with one-size-fits-all system-level control over the user service features, and the way of restriction is too rigid to meet more behavioral needs of users, and realize an IPTV system in which user resources can be effectively and flexibly controlled to reduce the system burden. Therefore, an embodiment of the present disclosure provides a method for managing user feature products of IPTV, which is applicable in the system of user feature restriction of IPTV Please refer to Fig. 1, which shows the device and system architecture diagram of user feature restriction of IPTV provided by the embodiment of the present disclosure.

IPTV system sets user features that need to be restricted, and stores them in IPTV feature product database. An IPTV portal associates such features with various products of IPTV system through a feature product module. IPTV operators can price products. Each product can be associated with multiple different user features at one time. The IPTV portal maintains the relationship between products and user features through the feature product module and stores them in the feature product database.

According to the required features, IPTV users subscribe feature products related to the required features through the subscription management module on IPTV terminals such as IPTV portals or set-top boxes. Unlike conventional subscription products, feature products can be repeatedly and accumulatively subscribed, so that the limited value of feature products can be accumulated, for example, even multiplied. The feature products can be subscribed by different billing modes such as monthly subscription, quarterly subscription, semi-annual subscription, or annual subscription, etc. The fees are collected by the billing management module. For a feature product that is automatically renewed on a monthly basis, the feature product billing management module, at the beginning of each month, automatically generates the monthly bill of the next cycle, and provides to the billing system of an IPTV operator for actual deduction. For a feature product that is in the renewed state, a user can cancel the renewal at a portal or an IPTV terminal, then at the end of this billing cycle, the subscription of the feature product will be expired, and in the next billing cycle the feature limited value corresponding to the feature product is no longer available to the user.

When the user uses the function corresponding to the feature product subscribed by himself, the maintenance management module accumulates the limited value corresponding to the feature product subscribed by the user to acquire a final upper limit, and compares the final upper limit with the consumed volume. If the final upper limit is not exceeded, the user can use the function corresponding to the feature normally, otherwise, the system will not allow the user to use the function corresponding to the feature, and prompt the user to subscribe related products before using it.

In view of this, based on the above-mentioned system of user feature restriction of IPTV, an embodiment of the present disclosure provides a method for managing user feature products of IPTV, which includes:
- acquiring product information of each of the user feature products in a user feature product database, and sending the product information to a subscription client, where the product information of each of the user feature products includes product identification information, user feature traffic volume, price and subscription mode;
- receiving a subscription request for a user feature product sent by the subscription client, where the subscription request for a user feature product includes a user account, target product identification information and target subscription mode;
- according to the target product identification information, finding a corresponding target user feature product from the user feature products, allocating a user feature traffic volume included in the target user feature product to a user account, and charging the user account according to a target subscription mode and the price of the target user feature product.

Please refer to the flowchart of the method for managing user feature products of IPTV as shown in Fig. 2. The embodiment of the present disclosure provides a method for managing user feature products of IPTV, which includes the following steps.

At S201, user feature product information in a feature product database is acquired, and the user feature product information is sent to a subscription client.

The product information of each of the user feature products includes product identification information, user feature traffic volume, price and subscription mode.

The user feature traffic includes at least one of the following: a number of sub-accounts associated with the user account, a number of online concurrent terminal devices, a number of terminal devices bound with the user account, traffic, personal recording space or personal recording duration.

The feature product database is mainly responsible for maintaining the user's feature data through a webpage, configuring a specific limited value and feature unit. The feature data mainly includes user feature code, feature description, limited value and feature unit, as shown in Table 1, these data are stored in the feature database of IPTV system.

The feature data table is shown in Table 1 below:

**Table 1**

| Featurecode | Feature description | Limited value | Feature unit |
|---|---|---|---|
| Subusernum | Sub-accounts associated with the user account | 2 | Number |
| Onlinetermnum3 | Online concurrent terminal devices | 2 | Number |
| Onlinetermnum 6 | Online concurrent terminal devices | 2 | Number |
| recordspacelimit | Personal recording space | 1 | GB |
| flow | Traffic | 500 | MB |
| recordtimelimit | Personal recording duration | 200 | Min |
| bindingtermnum | Terminal devices bound with the user account | 2 | Number |

In the embodiment of the present disclosure, the feature products can be set as free products or defined as billing products. If users need to enjoy more system resources, they need to spend more money to subscribe corresponding products, and at the same time, the revenue for IPTV operators is increased. Specifically, IPTV can set an initial free limited value for the feature traffic of each feature. For example, the number of sub-accounts that can be associated with a user account is set at 2 for free, the number of online concurrent terminal devices is set at 2 for free, the number of terminal devices bound to the user account is set at 2 for free, the free limit for traffic is set at 500MB, the free limit for personal recording space is 1 GB, and the free limit for personal recording duration is set at 200 minutes. If these features are within the range of the limited value, users can use them free of charge. If the users need to use more of the limited value of these features, the users need to subscribe feature products to increase the limited number of features. For example, if a user considers that 1 GB of personal recording space is not enough and need more personal recording space, he can subscribe additional personal recording space, such as 4 GB of personal recording space to increase the size of the recording space.

In an example, the user feature products in the user feature product database include at least one single-item user feature product. The product information of the single-item user feature product only includes user feature traffic volume. In an example, the feature product is a traffic product. For example, when the user's free traffic is used up, the user can subscribe the traffic product to continue using the traffic.

In this example, the subscription modes include at least one of the following: daily subscription, monthly subscription, quarterly subscription, or annual subscription.

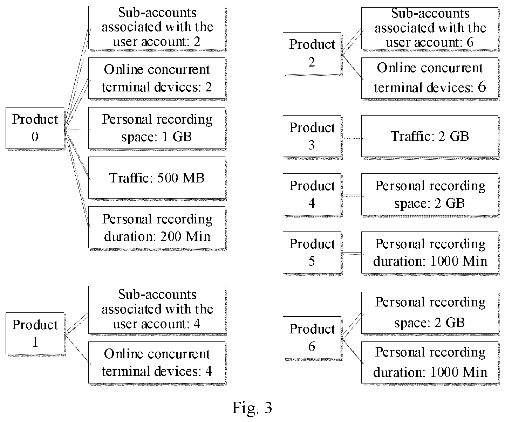

In some embodiments, the feature products include those shown in Fig. 3, in which product 0 represents the limited number of features that users can use free of charge, that is, feature traffic, and product 1 is the subscription for the number of family sub-accounts and the number of online concurrent terminal devices of the first type. When users need to increase the number of family sub-accounts or the number of online concurrent terminal devices of the first type, they can subscribe this product, and at the same time, they can subscribe this product in a monthly, quarterly or annual subscription. Product 3 is the subscription of traffic. When the user's free traffic is used up, the user can choose to subscribe to traffic products. Product 4 is personal recording space. If users need to expand the size of personal recording space, they can subscribe this feature product according to their needs, so as to increase the personal recording space. Product 5 is the personal recording duration. When users need to increase the recording duration, they can choose to subscribe the product according to their needs. A user can repeatedly subscribe a same feature product, for example, if the user subscribes a feature product with a personal recording space of 2GB, and the user still considers that it is not enough, he can subscribe the same feature product with a capacity of 2 GB again, so that the user subscribes a total personal recording space of 4 GB. It should be understood that the feature products include, but are not limited to, the above products, and can be flexibly set according to needs and specific situations.

In the embodiment of the present disclosure, acquiring user feature product information in a feature product database and sending the user feature product information to a subscription client include at least one of the following:
- Receiving a request for product displaying sent by the subscription client, acquiring the product information of each of the user feature products in the user feature product database, generating a display page and sending the display page to the subscription client for display, where the subscription client is a set-top box;
- Receiving a webpage request sent by a subscription client, acquiring the product information of each of the user feature products in the user feature product database, generating a webpage and sending the webpage to the subscription client, where the subscription client is a web portal;
- Acquiring the product information of each of the user feature products in the user feature product database to generate notification information and send the notification information to the subscription client, where the subscription client is a mobile terminal.

At S202, a subscription request for a feature product is received, which is sent by the subscription client.

The subscription request for a user feature product includes a user account, target product identification information and target subscription mode.

In this embodiment, when a user needs to subscribe a feature product, he can send a product subscription request to subscribe a corresponding feature product. For example, when the user needs to increase the size of personal recording space, the target product to be subscribed is product 4, which is the target product identification information, and the subscription mode can be any one of monthly subscription, quarterly subscription or annual subscription.

In this embodiment, the user can send a subscription request through the set-top box. When receiving the subscription request sent by the subscription client, the system acquires the product information of each of the user feature products in the user feature product database, generates a display page and send it to the subscription client for display, and the user can subscribe the corresponding feature product on the display page. The user can also send a subscription request through the web portal, the system receives the subscription request sent by the subscription client, acquires the product information of each of the user feature products in the user feature product database, generates a webpage and send it to the subscription client, and the user can subscribe the corresponding feature product on the webpage. The user can also send a subscription request through the mobile terminal. When receiving the subscription request sent by the subscription client, the system acquires the product information of each of the user feature products in the user feature product database to generate notification information and send it to the subscription client. The user can choose to subscribe the corresponding feature products in the notification information.

At S203, according to the target product identification information, the corresponding target user feature product is found, the user feature traffic volume is allocated, and charging is performed according to the target subscription mode.

In this embodiment, if the user needs to increase the personal recording duration, the user can subscribe the personal recording duration. The system finds the corresponding target user feature product from the user feature products according to the target product identification information, that is, product 5, and allocates the expanded user feature traffic included in the target user feature product to the user account, for example, the personal recording duration of 1000 minutes. After the subscription is completed, the user can enjoy the 1000-minute recording duration limit. Moreover, the system charges the user account according to the target subscription mode and price. For a periodic feature product subscribed by monthly subscription or other modes, the user can cancel the renewal or renew the feature product of the next cycle on the set-top box client or the web portal. Correspondingly, the IPTV system deducts the rent of the renewed feature product at the beginning of each month, otherwise the product will expire at the end of that month. After the subscription expires, the user will no longer enjoy the previous subscription of the feature product. For example, the user has subscribed two featured products with 2 GB of personal recording space. If the user chooses one of the subscription not to renew, the user will only enjoy 2 GB of personal recording space next month.

The method for managing user feature products of IPTV provided by the embodiment of the present disclosure includes: acquiring user feature product information in a feature product database and sending the user feature product information to a subscription client; receiving a subscription request for a feature product, which is sent by the subscription client; according to the target product identification information, finding the corresponding target user feature product, allocating the user feature traffic volume, and performing charging according to the target subscription mode. By utilizing user features bound with products and modes of subscribing products, the effective control of user features is realized. In some implementations, the limitation mode of user behavior specified by the system by default is changed. By packaging user behavior features into feature products, the right of behavior limitation is given to users themselves, so that system resources can be better allocated and utilized, and user experience can be improved.

### Embodiment two:

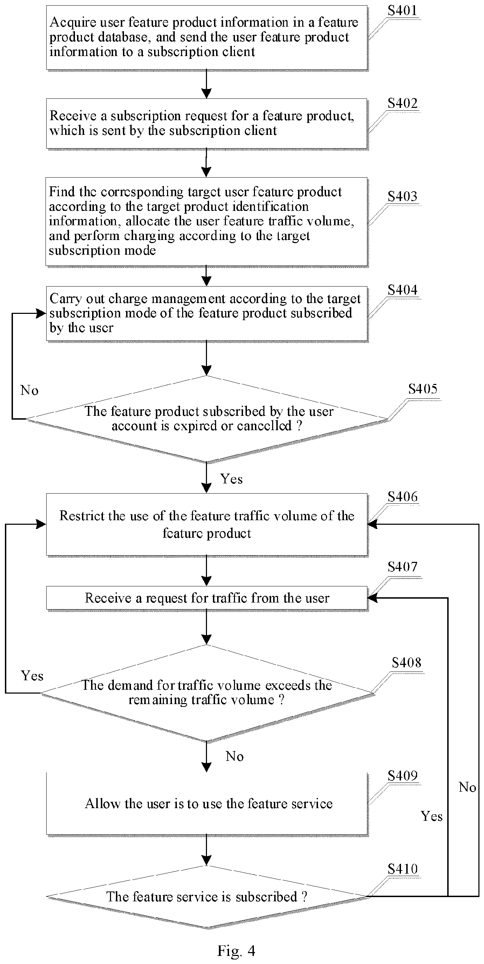

Fig. 4 is a flow chart of the method for managing user feature products of IPTV provided by embodiment two of the present disclosure. Some existing IPTV systems operate in a laissez-faire state or with one-size-fits-all system-level control over the user service features, and the way of restriction is too rigid to meet more behavioral needs of users, and realize an IPTV system in which user resources can be effectively and flexibly controlled to reduce the system burden. In view of above issues, an embodiment of the present disclosure provides a method for managing user feature products of IPTV, which includes the following steps.

At S401, user feature product information in a feature product database is acquired, and the user feature product information is sent to a subscription client.

The product information of each of the user feature products includes product identification information, user feature traffic volume, price and subscription mode.

The user feature traffic includes at least one of the following: a number of sub-accounts associated with the user account, a number of online concurrent terminal devices, a number of terminal devices bound with the user account, traffic, personal recording space or personal recording duration.

The feature product database is mainly responsible for maintaining the user's feature data through a webpage, configuring a specific limited value and feature unit. The feature data mainly includes user feature code, limited value and feature unit. These data are stored in the feature database of IPTV system.

In this embodiment, the feature products can be set as free products or defined as billing products. If users need to enjoy more system resources, they need to spend more money to subscribe the corresponding products, and at the same time, the revenue for IPTV operators is increased. Specifically, IPTV can set an initial free limited value for the feature traffic of each feature. For example, the number of sub-accounts that can be associated with a user account is set at 2 for free, the number of online concurrent terminal devices is set at 2 for free, the number of terminal devices bound to the user account is set at 2 for free, the free limit for traffic is set at 500MB, the free limit for personal recording space is 1 GB, and the free limit for personal recording duration is set at 200 minutes. If these features are within the range of the limited value, users can use them free of charge. If the users need to use more of the limited value of these features, the users need to subscribe feature products to increase the limited number of features. For example, if a user considers that 1 GB of personal recording space is not enough and need more personal recording space, he can subscribe additional personal recording space, such as 4 GB of personal recording space to increase the size of the recording space.

In an example, the user feature products in the user feature product database include at least one single-item user feature product. The product information of the single-item user feature product only includes user feature traffic volume. In an example, the feature product is a traffic product. For example, when the user's free traffic is used up, the user can subscribe the traffic product to continue using the traffic.

In this example, the subscription modes include at least one of the following: daily subscription, monthly subscription, quarterly subscription, or annual subscription. A user can repeatedly subscribe a same feature product, for example, if the user subscribes a feature product with a personal recording space of 2GB, and the user still considers that it is not enough, he can subscribe the same feature product with a capacity of 2 GB again, so that the user subscribes a total personal recording space of 4 GB.

In the embodiment of the present disclosure, acquiring user feature product information in a feature product database and sending the user feature product information to a subscription client include at least one of the following:
- Receiving a request for product displaying sent by the subscription client, acquiring the product information of each of the user feature products in the user feature product database, generating a display page and sending the display page to the subscription client for display, where the subscription client is a set-top box;
- Receiving a webpage request sent by a subscription client, acquiring the product information of each of the user feature products in the user feature product database, generating a webpage and sending the webpage to the subscription client, where the subscription client is a web portal;
- Acquiring the product information of each of the user feature products in the user feature product database to generate notification information and send the notification information to the subscription client, where the subscription client is a mobile terminal.

At S402, a subscription request for a feature product is received, which is sent by the subscription client.

The subscription request for a user feature product includes a user account, target product identification information and target subscription mode.

In this embodiment, when a user needs to subscribe a feature product, he can send a product subscription request to subscribe a corresponding feature product. For example, when the user needs to increase the size of personal recording space, the target product to be subscribed is product 3, which is the target product identification information, and the subscription mode can be any one of monthly subscription, quarterly subscription or annual subscription.

In this embodiment, the user can send a subscription request through the set-top box. When receiving the subscription request sent by the subscription client, the system acquires the product information of each of the user feature products in the user feature product database, generates a display page and send it to the subscription client for display, and the user can subscribe the corresponding feature product on the display page. The user can also send a subscription request through the web portal, the system receives the subscription request sent by the subscription client, acquires the product information of each of the user feature products in the user feature product database, generates a webpage and send it to the subscription client, and the user can subscribe the corresponding feature product on the webpage. The user can also send a subscription request through the mobile terminal. When receiving the subscription request sent by the subscription client, the system acquires the product information of each of the user feature products in the user feature product database to generate notification information and send it to the subscription client. The user can choose to subscribe the corresponding feature products in the notification information.

At S403, according to the target product identification information, the corresponding target user feature product is found, the user feature traffic volume is allocated, and charging is performed according to the target subscription mode.

In this embodiment, if the user needs to increase the personal recording duration, the user can subscribe the personal recording duration. The system finds the corresponding target user feature product from the user feature products according to the target product identification information, that is, product 4, and allocates the expanded user feature traffic included in the target user feature product to the user account, for example, the personal recording duration of 1000 minutes. After the subscription is completed, the user can enjoy the 1000-minute recording duration limit. Moreover, the system charges the user account according to the target subscription mode and price. For a periodic feature product subscribed by monthly subscription or other modes, the user can cancel the renewal or renew the feature product of the next cycle on the set-top box client or the web portal. Correspondingly, the IPTV system deducts the rent of the renewed feature product at the beginning of each month, otherwise the product will expire at the end of that month. After the subscription expires, the user will no longer enjoy the previous subscription of the feature product. For example, the user has subscribed two featured products with 2 GB of personal recording space. If the user chooses one of the subscription not to renew, the user will only enjoy 2 GB of personal recording space next month.

At S404, according to the target subscription mode of the feature product subscribed by the user, charge management is carried out.

In this step, for example, the system charges the feature product subscribed by the user, and deducts the monthly rent for a periodic feature product.

At S405, whether the feature product subscribed by the user account is expired or cancelled is detected; if expired or cancelled, the method proceeds to step S406; otherwise, the method proceeds to step S404.

During the user's use of a related subscribed feature product, the system detects whether the feature product subscribed by the user has expired or whether the user has cancelled the subscribed feature product. If the feature product subscribed by the user has expired, then the feature service related to the feature product will be no longer available to the user, that is, the duration of use can't exceed the limited number of the feature service. If the user needs to use additional limited number of the feature service, the user needs to subscribe the feature product again. If the user cancels the subscription of the feature product, the feature service related to the feature product will be no longer available to the user from the next cycle. If the user needs to use additional limited value of the feature service in the next cycle, the user needs to subscribe the feature product again.

At S406, the use of the feature traffic volume of the feature product is restricted.

When the feature product subscribed by the user expires or the user cancels the subscription of the feature product, the system will restrict the feature service when the user tries to use the feature service, that is, when the feature service exceeds the limited value, the user will not be able to use it.

At S407, a request for traffic is received from the user.

The received request for traffic includes: the user account and a demand for traffic volume.

At S408, whether the demand for traffic volume exceeds the remaining traffic volume is determined; if the demand for traffic volume exceeds the remaining traffic volume, the method proceeds to step S409; otherwise, the method proceeds to step S406.

When the user uses the feature service of the feature product, it is detected whether the user exceeds the remaining traffic volume. For example, if the personal recording space subscribed by the user is 4 GB, then the user can't use the personal recording function beyond the limited space of 4 GB. If the usage exceeds 4 GB of space, the user's usage is restricted, and the user is prompted to subscribe to this feature service to increase the recording space.

At S409, the user is allowed to use the feature service.

At S410, it's determined whether the feature service is subscribed; if the feature service is not subscribed, the method proceeds to step S406; otherwise, the method proceeds to step S407.

If it is detected that the feature service that the user currently wants to use is not subscribed by the user, the user is not allowed to use the feature service, and the user is prompted to subscribe to the feature service before continuing to use it.

The method for managing user feature products of IPTV provided by the embodiment of the present disclosure includes: acquiring user feature product information in a feature product database and sending the user feature product information to a subscription client; receiving a subscription request for a feature product, which is sent by the subscription client; according to the target product identification information, finding the corresponding target user feature product, allocating the user feature traffic volume, and performing charging according to the target subscription mode. By using products to bind user features and subscription products, the effective control of user features is realized. In some implementations, the limitation mode of user behavior specified by the system by default is changed. By packaging user behavior features into feature products, the right of behavior limitation is given to users themselves, so that system resources can be better allocated and utilized, and user experience can be improved.

### Embodiment three:

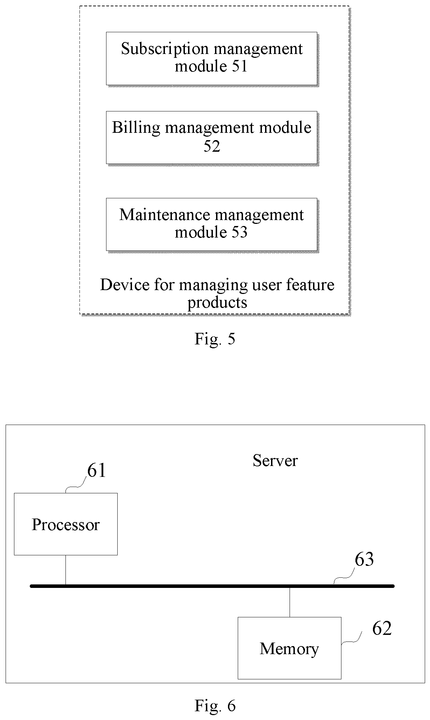

In view of above issues, an embodiment of the present disclosure provides a device for managing user feature products of IPTV Please refer to Fig. 5 which shows the architecture diagram of the device for managing user feature products of IPTV provided by the embodiment of the present disclosure.

An embodiment of the present disclosure provides a device for managing user feature products of IPTV, which includes the following modules.

A subscription management module 51 is configured to acquire product information of each of the user feature products in a user feature product database, and send the product information to a subscription client, where the product information of each of the user feature products includes product identification information, user feature traffic volume, price and subscription mode; and receive a subscription request for a user feature product sent by the subscription client, where the subscription request for a user feature product comprises a user account, target product identification information and target subscription mode.

In this embodiment of the present disclosure, acquiring user feature product information in a feature product database and sending the user feature product information to a subscription client include at least one of the following:
- Receiving a request for product displaying sent by the subscription client, acquiring the product information of each of the user feature products in the user feature product database, generating a display page and sending the display page to the subscription client for display, where the subscription client is a set-top box;
- Receiving a webpage request sent by a subscription client, acquiring the product information of each of the user feature products in the user feature product database, generating a webpage and sending the webpage to the subscription client, where the subscription client is a web portal;
- Acquiring the product information of each of the user feature products in the user feature product database to generate notification information and send the notification information to the subscription client, where the subscription client is a mobile terminal.

In this embodiment, the user can send a subscription request through the set-top box. When receiving the subscription request sent by the subscription client, the system acquires the product information of each of the user feature products in the user feature product database, generates a display page and send it to the subscription client for display, and the user can subscribe the corresponding feature product on the display page. The user can also send a subscription request through the web portal, the system receives the subscription request sent by the subscription client, acquires the product information of each of the user feature products in the user feature product database, generates a webpage and send it to the subscription client, and the user can subscribe the corresponding feature product on the webpage. The user can also send a subscription request through the mobile terminal. When receiving the subscription request sent by the subscription client, the system acquires the product information of each of the user feature products in the user feature product database to generate notification information and send it to the subscription client. The user can choose to subscribe the corresponding feature products in the notification information.

A billing management module 52 is configured to, according to the target product identification information, find a corresponding target user feature product from the user feature products, allocate a user feature traffic volume included in the target user feature product to a user account, and charge the user account according to a target subscription mode and the price of the target user feature product.

The billing management module 52 is configured to charge the feature product subscribed by the user and deduct the monthly rent for a periodic feature product subscribed monthly. For a periodic feature product subscribed by monthly subscription, the user can cancel the renewal or renew the feature product of the next cycle on the set-top box client or the web portal. Correspondingly, the IPTV system deducts the rent of the renewed feature product at the beginning of each month, otherwise the product will expire at the end of that month. After the subscription expires, the previous subscription of the feature product will be no longer available to the user. For example, the user has subscribed two featured products with 2 GB of personal recording space. If the user chooses one of the subscription not to renew, the user will only enjoy 2 GB of personal recording space next month.

A maintenance management module 53 is further provided, which is configured to perform at least one of the following:
- Receiving a request for traffic, which includes the user account and a demand for traffic volume; and determining whether the demand for traffic volume exceeds the limit of remaining traffic volume, according to the user feature product subscribed by the user account; when the user uses the feature service of the feature product, it is detected whether the user exceeds the remaining traffic volume; for example, if the personal recording space subscribed by the user is 4 GB, then the user can't use the personal recording function beyond the limited space of 4 GB. If the usage exceeds 4 GB of space, the user's usage is restricted, and the user is prompted to subscribe to this feature service to increase the recording space;
- Receiving a request for traffic, which includes the user account and a demand for traffic volume; and determining that the service is not subscribed, according to the user feature product subscribed by the user account; if it is detected that the feature service that the user currently wants to use is not subscribed by the user, the user is not allowed to use the feature service, and the user is prompted to subscribe to the feature service before continuing to use it.

A device for managing user feature products of IPTV is provided by the embodiment of the present disclosure. By utilizing user features bound with products and modes of subscribing products, the effective control of user features is realized. In some implementations, the limitation mode of user behavior specified by the system by default is changed. By packaging user behavior features into feature products, the right of behavior limitation is given to users themselves, so that system resources can be better allocated and utilized, and user experience can be improved.

### Embodiment four:

This embodiment provides a server, as shown in Fig. 6, which includes a processor 61, a memory 62 and a communication bus 63.

The communication bus 63 is configured to implement a connection and communication between the processor 61 and the memory 62.

The processor 61 is configured to execute one or more computer programs stored in the memory 62, to implement at least one step in the method for managing user feature products of IPTV in embodiment one and two described above.

This embodiment also provides a computer-readable storage medium including volatile or nonvolatile, removable or non-removable media implemented in any method or technology for storing information such as computer-readable instructions, data structures, computer program modules or other data. Computer-readable storage medium include, but are not limited to, Random Access Memory (RAM), Read-Only Memory (ROM), Electrically Erasable Programmable Read Only Memory (EEPROM), flash memory or other memory technologies, compact disc read-only memory (CD-ROM), digital versatile disc (DVD) or other optical disc storage, magnetic box, magnetic tape, magnetic disc storage or other magnetic storage devices, or any other medium that can be used to store desired information and can be accessed by a computer.

The computer-readable storage medium in this embodiment is configurable to store one or more computer programs, and the stored one or more computer programs are executable by a processor, to implement at least one step of the method for managing user feature products in the above-mentioned embodiment one and two.

It can be seen that those having ordinary skills in the art should understand that all or some of the steps in the methods, and functional modules/units in the systems and devices disclosed above can be implemented as software (which can be implemented by computer program codes executable by computing devices), firmware, hardware and appropriate combinations thereof. In the hardware implementation, the division between functional modules/units mentioned in the above description does not necessarily correspond to the division of physical components. For example, a physical component can have multiple functions, or a function or step can be performed by several physical components in cooperation. Some or all physical components can be implemented as software executed by a processor, such as a central processing unit, a digital signal processor or a microprocessor, or as hardware, or as an integrated circuit, such as an application specific integrated circuit.

Furthermore, it is well known to those having ordinary skills in the art in the art that communication media usually contain computer-readable instructions, data structures, computer program modules or other data in modulated data signals such as carrier waves or other transmission mechanisms, and can include any information delivery media. Therefore, the present disclosure is not limited to any specific combination of hardware and software.

A method and device for managing user feature products of IPTV, a server and a computer-readable storage medium are provided by the embodiments of the present disclosure. By utilizing user features bound with products and modes of subscribing products, the effective control of user features is realized. In some implementations, the limitation mode of user behavior specified by the system by default is changed. By packaging user behavior features into feature products, the right of behavior limitation is given to users themselves, so that system resources can be better allocated and utilized, and user experience can be improved.

Detailed descriptions of the embodiments of the present disclosure are provided in combination with particular implementations, it should not be considered that the implementations of the present disclosure are only limited to these descriptions. For those having ordinary skills in the art to which the present disclosure belongs, without departing from the concept of the present disclosure, several simple deductions or substitutions can be made, all of which should be regarded as belonging to the scope of protection of the present disclosure.

Apparently, those having ordinary skills in the art should understand that the above-mentioned modules or steps of the embodiments of the present disclosure can be realized by general-purpose computing devices, they can be integrated on a single computing device or distributed on a network composed of multiple computing devices, and alternatively, they can be realized by program codes executable by the computing devices, so that they can be stored in storage devices and executed by the computing devices, and in some cases, the steps shown or described can be performed in a different order than what has been described, or they can be separately made into individual integrated circuit modules, or multiple modules or steps among them can be made into a single integrated circuit module. Therefore, the embodiments of the present disclosure are not limited to any specific combinations of hardware and software.

The present disclosure provides several embodiments, which are not intended to limit the present disclosure. Various modifications and variations can be made by those having ordinary skills in the art within the scope of the present disclosure. Any modification, equivalent substitution, improvement, etc. made within the principle of the present disclosure should be included within the scope of protection of the present disclosure.

## Claims

1. A method for managing user feature products of IPTV, comprising:
acquiring product information of each of the user feature products in a user feature product database, and sending the product information to a subscription client, wherein the product information of each of the user feature products comprises product identification information, user feature traffic volume, price and subscription mode;
receiving a subscription request for a user feature product sent by the subscription client, wherein the subscription request for a user feature product comprises a user account, target product identification information and target subscription mode; and
finding the target user feature product in the user feature products corresponding to the target product identification information, allocating a user feature traffic volume included in the target user feature product to a user account, and charging the user account according to the target subscription mode and the price of the target user feature product.

2. The method for managing user feature products of IPTV of claim 1, wherein the user feature traffic comprises at least one of: a number of sub-accounts associated with the user account, a number of online concurrent terminal devices, a number of terminal devices bound with the user account, traffic, personal recording space or personal recording duration.

3. The method for managing user feature products of IPTV of claim 1, wherein the user feature products in the user feature product database comprise at least one single-item user feature product, the product information of the single-item user feature product comprises user feature traffic volume.

4. The method for managing user feature products of IPTV of claim 1, wherein the subscription modes comprise at least one of the following: daily subscription, monthly subscription, quarterly subscription, or annual subscription.

5. The method for managing user feature products of IPTV of claim 1, wherein acquiring product information of each of the user feature products in a user feature product database and sending the product information to a subscription client comprises at least one of:
receiving a request for product displaying sent by the subscription client, acquiring the product information of each of the user feature products in the user feature product database, generating a display page and sending the display page to the subscription client for display, wherein the subscription client is a set-top box;
receiving a webpage request sent by a subscription client, acquiring the product information of each of the user feature products in the user feature product database, generating a webpage and sending the webpage to the subscription client, wherein the subscription client is a web portal; or
acquiring the product information of each of the user feature products in the user feature product database to generate notification information, and sending the notification information to the subscription client, wherein the subscription client is a mobile terminal.

6. The method for managing user feature products of IPTV of any one of claims 1 to 5, further comprising:
in response to a detection that the user feature product subscribed by the user account is expired or the user feature product is canceled by the user account, performing a restriction of the user feature product over the user account.

7. The method for managing user feature products of IPTV of any one of claims 1 to 5, further comprising at least one of:
receiving a request for traffic, which comprises the user account and a demand for traffic volume; and determining whether the demand for traffic volume exceeds a remaining traffic volume, according to the user feature product subscribed by the user account; or
receiving a request for traffic, which comprises the user account and a demand for traffic volume; and determining a non-subscribed traffic volume according to the user feature product subscribed by the user account.

8. A device for managing user feature products of IPTV, comprising:
a subscription management module, configured to acquire product information of each of the user feature products in a user feature product database, and send the product information to a subscription client, wherein the product information of each of the user feature products comprises product identification information, user feature traffic volume, price and subscription mode; and receive a subscription request for a user feature product sent by the subscription client, wherein the subscription request for a user feature product comprises a user account, target product identification information and target subscription mode; and
a billing management module, configured to find the target user feature product in the user feature products corresponding to the target product identification information, allocate a user feature traffic volume included in the target user feature product to a user account, and charge the user account according to the target subscription mode and the price of the target user feature product.

9. The device for managing user feature products of IPTV of claim 8, further comprising a maintenance management module configured to perform at least one of:
receive a request for traffic, which comprises the user account and a demand for traffic volume; and determine whether the demand for traffic volume exceeds a remaining traffic volume, according to the user feature product subscribed by the user account; or
receiving a request for traffic, which comprises the user account and a demand for traffic volume; and determine a non-subscribed traffic volume according to the user feature product subscribed by the user account.

10. A server, comprising a processor, a memory and a communication bus; wherein,
the communication bus is configured to implement a connection and communication between the processor and the memory; and
the processor is configured to execute at least one computer programs stored in the memory, to implement the method for managing user feature products of IPTV of any one of claims 1 to 7.

11. A computer-readable storage medium storing at least one computer programs executable by at least one processor, to implement the method for managing user feature products of IPTV of any one of claims 1 to 7.
